# EUROPEAN PATENT SPECIFICATION

(11) **EP 2 070 067 B1**
(45) Date of publication and mention of the grant of the patent: **06.05.2020**
(21) Application number: 07814246.0
(22) Date of filing: 20.08.2007
(51) Int. Cl.: G08C 25/02, H04L 1/18, H04L 1/00, H04L 29/06

(54) **HYBRID CORRECTION SCHEME FOR DROPPED PACKETS**
HYBRIDES KORREKTURSCHEMA FÜR ABGEWORFENE PAKETE
SCHÉMA DE CORRECTION HYBRIDE POUR PAQUETS PERDUS

(30) Priority: 11.09.2006 US 825268 P; 16.04.2007 US 735930
(43) Date of publication of application: 17.06.2009
(73) Proprietor: Cisco Technology, Inc., San Jose, CA 95134-1706 (US)
(72) Inventor: ORAN, David R., Acton, Massachusetts 01720 (US); VERSTEEG, William, Alpharetta, Georgia 30022 (US)
(74) Representative: Kazi, Ilya
(86) International application number: PCT/US2007/076265
(87) International publication number: WO 2008/033645

(56) References cited:
- US-B2- 6 782 490
- US-B2- 6 782 490
- WONYONG YOON ET AL: "A combined group/tree approach for scalable many-to-many reliable multicast", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 3, 23 June 2002 (2002-06-23), pages 1336-1345, XP010593700, DOI: 10.1109/INFCOM.2002.1019384 ISBN: 978-0-7803-7476-8
- VICTOR O K LI ET AL: "Internet Multicast Routing and Transport Control Protocols", PROCEEDINGS OF THE IEEE, IEEE. NEW YORK, US, vol. 90, no. 3, 1 March 2002 (2002-03-01), XP011064978, ISSN: 0018-9219
- HRISHIKESH GOSSAIN ET AL: "Multicast: Wired to Wireless", IEEE COMMUNICATIONS MAGAZINE, IEEE SERVICE CENTER, PISCATAWAY, US, vol. 40, no. 6, 1 June 2002 (2002-06-01), pages 116-123, XP011092872, ISSN: 0163-6804
- ERRAMILLI A ET AL: "A performance analysis of protocols for multicast communication in broadband packet networks", 19880613; 19880613 - 19880617, 13 June 1988 (1988-06-13), pages 222-226, XP010077385,

## Description

### TECHNICAL FIELD

The present disclosure relates generally to the field of networking.

### BACKGROUND

Packet switch networks are now being used to transport streaming media, such as video and audio from a media server to multiple receivers, such as computer terminals and Set Top Boxes (STBs). However, packet switched networks typically use a best effort scheme that may significantly delay or drop some packets. Retransmission schemes have been designed to retransmit the dropped or delayed media packets to receivers.

Unicast retransmissions of multicast streams is an attractive recovery technique when the errors are uncorrelated, such as errors occurring on the individual accesses branches connected to the receivers. This may include errors on subscriber access lines of a Digital Subscriber Loop (DSL) network, hi these cases, the probability is small that the packet loss is due to errors on a shared link upstream of the branching to the individual receivers compared to the errors in the individual access links themselves. Conversely, unicast retransmission is a poor solution for either correlated errors or long burst errors. This is primarily because of Negative ACKnowledgment (NACK) implosion where many receivers request retransmissions of the same packets at the same time. The bandwidth multiplication of sending many unicast copies of the same repair packet may prevent packet repair.

US 2004/078624 discloses a method for the repair of IP multicast sessions. A repair server polls multiple transmit servers to accumulate as many of the packets missing from the multicast session as possible. A network includes a source of multicast packets in a multicast session and a plurality of multicast recipients in that session. A repair server in the network provides the packets it receives to the recipients. The repair server includes a missing packet detector. There is a plurality of retransmit servers in the network buffering portions of the packets they respectively receive during the session. The repair server maintains an ordered list of the retransmit servers that are most likely to have buffered copies of packets missing from the session.; When the repair server detects that there are packets missing from the session it has received, it uses the ordered list to sequentially request the missing packets from respective ones of the plurality of retransmit servers

### BRIEF DESCRIPTION OF THE DRAWINGS

FIG. 1 is a block diagram of a network that uses a hybrid packet repair scheme.
FIG. 2 is a more detailed diagram of repair point that operates the hybrid packet repair scheme shown in FIG. 1.
FIG. 3 shows examples of NACK table states used when selecting between different types of repair schemes.
FIG. 4 is a flow diagram showing on a high level the operations performed by the hybrid packet repair scheme shown in FIGS. 1 and 2.
FIG. 5 is a flow diagram showing different parameters used by the hybrid packet repair scheme.
FIG. 6 is a flow diagram showing how the hybrid packet repair scheme determines a NACK density.
FIG. 7 is a flow diagram showing how the hybrid packet repair scheme considers different error correction and network parameters when selecting particular repair schemes.
FIG. 8 is a flow diagram showing how the hybrid packet repair scheme may operate with a low NACK density.
FIG. 9 is a flow diagram showing how the hybrid packet repair scheme may operate with a high NACK density.

### DESCRIPTION OF EXAMPLE EMBODIMENTS

### Overview

In one embodiment, a hybrid packet repair scheme adaptively switches among unicast retransmission, multicast retransmission, and Forward Error Correction (FEC) depending on the receiver population and the nature of the error prompting the repair operation. The NACK patterns are used to heuristically determine the degree of correlation among packet losses. In an additional embodiment, wasting bandwidth and processing on retransmissions of FEC that will fail to correct the errors is avoided by evaluating the nature of the error and the bandwidth needed to optimally repair it. Unicast retransmission, multicast retransmission, or FEC repair is then dynamically performed according to the loss patterns derived from the NACK arrivals and other network conditions.

### Description

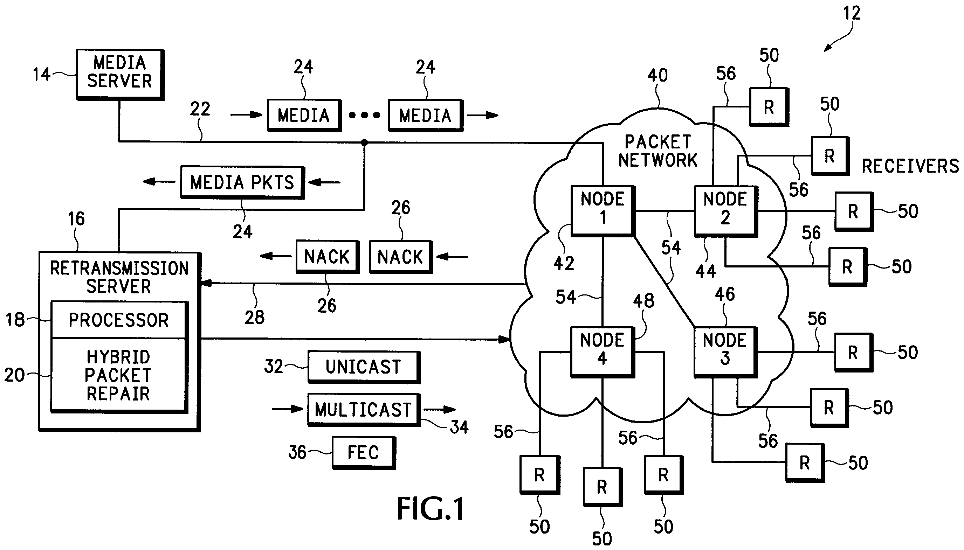

FIG. 1 shows an Internet network 12 that includes a packet switched network 40 that includes multiple different nodes 42-48. The nodes 42-48 may be routers, switches, gateways, call accumulators, or any other network processing device that directs packets 24 to different receivers 50. A media server 14 outputs one or more media streams 22 that each include a sequence of media packets 24. The media server 14 could store the media locally or receive the media from another server or media source via another network, satellite, cable, or any other communication media.

The media server 14 may send the media packets 24 to any combination of different receivers 50 via the packet switched network 40. The receivers 50 can be any device that receives media packets 24. For example, the receivers 50 could be Personal Computers (PCs), Set-Top Boxes (STBs), Personal Digital Assistants (PDAs), Voice Over Internet Protocol (VOIP) phones, Internet connected television, cellular telephones, etc. Any combination of media packets 24 may be dropped, lost, and/or delayed for any number of different reasons at different points along the network paths from media server 14 to the different receivers 50.

A retransmission server is alternatively referred to as a repair point 16 and receives and caches the media packets 22 sent to the receivers 50 by media server 14. Any of the receivers 50 that do not successfully receive any of the media packets 24, sends an associated NACK message 26 back to the retransmission server 16. The retransmission server 16 uses a hybrid packet repair scheme 20 to dynamically send different types of unicast retransmission packets 32, multicast retransmission packets 34, and/or FEC packets 36 according the characteristics of the NACKs 26 received back from the receivers 50.

### Analyzing Lost Packets

An error or lost packet refers to any media packet 24 that is not successfully received by one of the intended receivers 50 within an expected time period. A correlated error refers to different packet losses that are related to each other. For example, all of the packet losses identified by receivers 50 connected to node 44 may be due to the same packets being dropped somewhere between node 42 and node 44. Correlated errors can be due to losses/outages on the backbone/regional network upstream of repair point 16. Correlated errors can also be due to losses/outages on the shared links/tunnels 54 through the packet network 40 connecting to the access links 56 for receivers 50. Other correlated errors may relate to common-mode losses on the individual access links 56 due to crosstalk or external impulse events like a lightning strike.

The FEC packets 36 may be used when the error spread is large (i.e. the error affects a random subset of the packets in a particular time window) and the number of lost packets is within the error correction coverage scope. The coverage scope and window are tuned by varying a constant bandwidth overhead and source block size for the FEC stream.

The FEC repair scheme described below may use Digital Video Broadcast (DVB) COP3 and/or Raptor-10 codes, which allow the FEC packets 36 to be sent separately from the main media stream 22 as opposed to error correction schemes that re-encode the original media packets 24 to include the FEC. Of course any other type of error correction scheme which puts the error correction data in different packets from the native media could also be used.

FEC may use more bandwidth than needed when the correlated errors are single packets or short bursts. For example, a single packet or a small group of packets may be identified as lost by multiple receivers 50. In these conditions, a single multicast retransmission using multicast packets 34 may be more efficient than FEC. For example, multicast repair may only need to multicast one lost packet with a single multicast retransmission (barring further errors) that reaches all the receivers identifying the loss. In contrast, the FEC repair may require sending multiple repair packets.

For outages or long burst losses (i.e. too large to be covered by FEC) nothing may work particularly well. This is partly because of the persistent NACK implosion effect, but mostly because the network 12 is rarely engineered for the extra traffic required to support a substantially large amount of retransmission or redundant stream transmission. The hybrid packet repair scheme 20 detects and ignores such errors by distinguishing them from situations where unicast retransmission 32, multicast retransmission 34, or FEC 36 would be effective. This ensures a stable packet repair scheme that does not collapse under large burst loss or outages.

The NACK implosion effect, if not carefully moderated, could be a catastrophic failure mode for any error correction scheme attempting error feedback for multicast streams with large receiver populations. This is because the NACKs 26 both consume reverse channel bandwidth, and also can flood the repair point 16 with control packets. The hybrid packet repair scheme 20 addresses these NACK implosions and uses NACK implosion to detect certain loss patterns and hence turns bursts of NACKs 26 on feedback control channel 28 into an advantage rather than a failure mode.

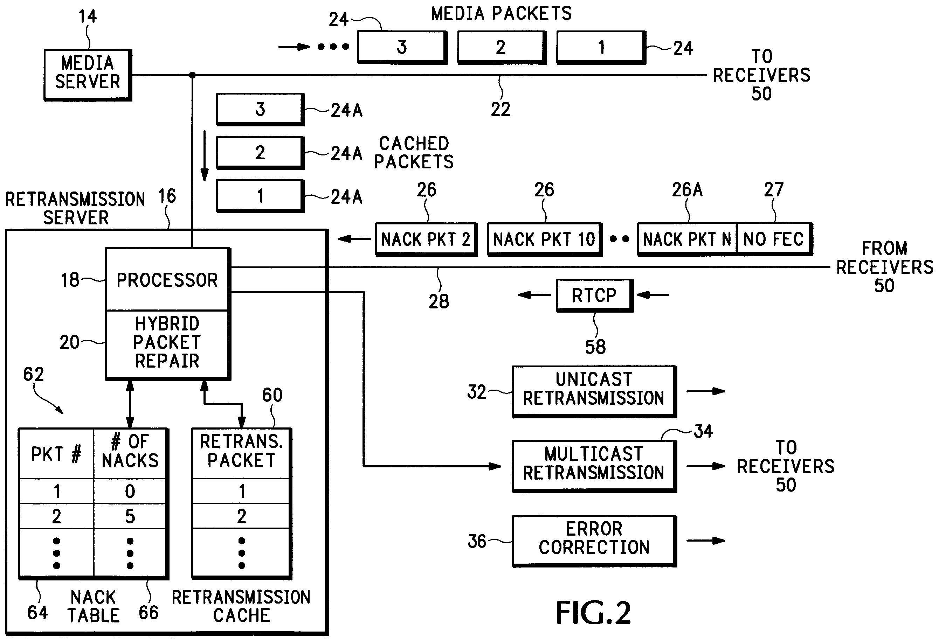

FIG. 2 shows the retransmission server (repair point) 16 in more detail. The processor 18 operates the hybrid packet repair scheme 20 that in one embodiment are computer executable software instructions. For each media channel 22, the repair point 16 caches the packet data 24A necessary for repairing any of the lost packet in media channel 22. The hybrid packet repair scheme 20 operates in conjunction with a retransmission cache 60 that caches the media packets 24A transmitted by media server 14. Retransmission cache 60 is used in conjunction with a NACK table 62 that counts the number of NACKS 26 received for each cached media packet 24A. For example, the NACKs 26 identify the sequence numbers of a set of lost media packets. Each time a NACK message 26 is received by repair point 16, a NACK count 64 for the associated lost packets 64 are incremented in table 62.

Based on the NACK pattern in NACK table 62, the hybrid packet repair scheme 20 sends different combinations of unicast retransmission packets 32, multicast retransmission packets 34 and/or FEC packets 36 to the receivers 50. The repair packets are used to replace the lost packets identified in the NACK messages 26.

The repair point 16 can also gauge the intensity of a NACK implosion even when NACKs might be lost due to congestion or the inability of the repair point to receive and process all the NACKs 26. The three loss cases of individual loss, correlated loss, and outage on the downstream primary multicast stream 22 can also be analyzed. In the case of correlated loss, the repair point 16 can also determine enough about the loss pattern to choose among unicast packet retransmission, multicast packet retransmission, and FEC repair.

### Establishing Media Channels

Still referring to FIG. 2, a given media "channel" 22 has a primary multicast Real Time Protocol (RTP) session along with a corresponding Real Time Control Protocol (RTCP) control channel. The media channel 22 may have a unicast repair RTP/RTCP session which can be established on demand according to the scheme described in US. Patent App. entitled: RETRANSMISSION-BASED STREAM REPAIR AND STREAM JOIN, filed: 11/17/06, serial no. 11/561,237.

This RTP/RTCP session may be used for unicast retransmission repair when the hybrid packet repair scheme 20 determines that unicast retransmission is the most effective way to repair a particular error.

A second SSM RTP/RTCP multicast session is added for multicast repair. The multicast retransmissions 34 can be sourced by the same retransmission server 16 at the same source address as the feedback target address for the main multicast RTP session. However, a different destination group address is used. Receivers 50 participating in the repair scheme join or leave this multicast group at the same time they join or leave the main multicast RTP session. This multicast repair session is used for both sending the multicast retransmission packets 34 using the RTP retransmission payload format and for sending FEC repair packets 36 using the native payload type for an in use FEC scheme. The two forms of unicast and multicast retransmission are distinguished by the receivers 50 using standard RTP conventions for payload type multiplexing in a single session.

Other unicast receiver feedback 58 is sent to the feedback address for the primary media session 22, and therefore is available to the retransmission server 16. These RTCP packets 58 in one embodiment are RTCP receiver reports. The retransmission server 16 uses the RTCP reports 58 to estimate the population of receivers 50 that are "homed" on retransmission server 16 for repairs. This receiver population is dynamic and approximate since receivers come and go, RTCP-Receiver Report packets may be lost, and mapping of receivers 50 to repair points can change.

Based on the identified population of receivers 50 and the pattern of NACKs 26, either RTP unicast repair packets 32 are sent via unicast retransmission, RTP multicast repair packets 34 are sent via multicast retransmission, or RTP FEC repair packets 36 are sent using a multicast retransmission.

### Selecting Repair Scheme

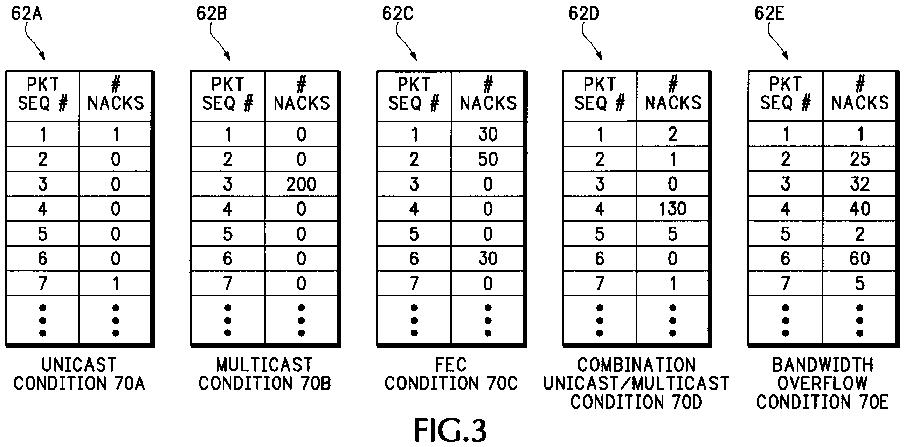

FIG. 3 shows different NACK patterns 70 that may determine the type of repair scheme 32, 34, or 36 used to repair lost packets. It should be understood that the example NACK patterns shown in FIG. 3 are only for illustrative purposes. The actual number of NACKs associated with lost packets and the number of different lost packets considered by the hybrid packet repair scheme 20 may vary according to the network bandwidth, type of transmitted media, number of receivers 50, etc.

In this example, a first NACK pattern 70A in NACK table state 62A shows one NACK received for a first media packet and one NACK was received for a seventh media packet. In this example, the hybrid repair scheme 20 may determine that sending two unicast retransmission packets 32 (FIG. 2) is the most efficient scheme for repairing the two lost packets. For example, sending two unicast retransmission packets 32 would use less total network bandwidth than sending two multicast retransmission packets.

A second example NACK pattern 70B in NACK table state 62B shows several hundred NACKs received only for the third media packet. In this state, the hybrid packet repair scheme 20 may determine that sending one multicast retransmission packet 34 for the third lost packet is most efficient. For example, sending one multicast retransmission packet 34 uses less bandwidth than sending 200 separate unicast packets 32 to each individual receiver sending one of the NACKs 26.

A third example NACK pattern 70C in NACK table state 62C indicates three different packets have been lost by multiple different receivers 50. In this condition, the hybrid packet repair scheme 20 may determine that sending two FEC packets is the most efficient way to repair the lost packets. For example, two FEC packets may be able to repair all three lost packets 1, 2, and 6. Thus, multicasting two FEC packets 36 (FIG. 2) would be more efficient than sending 110 individual unicast retransmission packets 32 or sending three separate multicast retransmission packets 34.

The FEC packets 36 can work with any number of packet-level FEC schemes, and do not require any particular form of FEC. FEC mapping onto IP protocols is described in a large number of Internet Engineering Task Force (IETF) Request For Comments (RFCs) and drafts, such as RFC3009, RFC3452, RFC3695, and therefore is not described in any further detail.

A fourth example NACK pattern 70D in NACK table state 62D indicates five different packets 1, 2, 4, 5, and 7 have been lost. In this case a combination of unicast retransmission packets 32 and multicast retransmission packets 34 may be the most efficient repair scheme. For example, unicast retransmission packets 32 may be sent to the relatively small number of individual receivers that lost packets 1, 2, 5, ad 7 and a single multicast retransmission packet 34 may be sent to all of the receivers 50 for lost packet 4.

A fifth example NACK pattern 70E in NACK table state 62E indicates every one of the packets 1-7 has been lost by different combinations of receivers. In this condition, the hybrid packet repair scheme 20 may determine that there is insufficient bandwidth to repair any of the lost packets and may abort any attempt to repair lost packets.

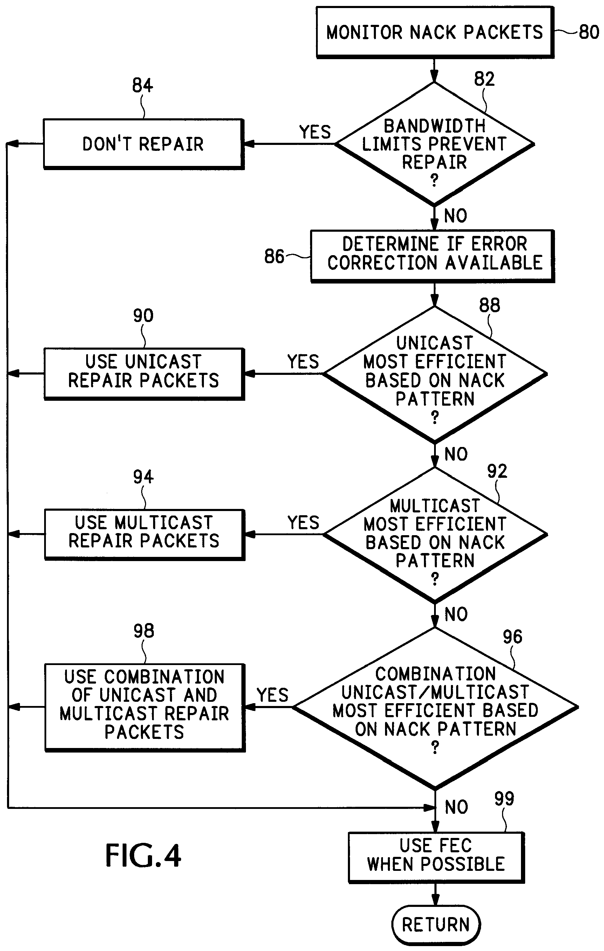

FIG. 4 shows one example of operations performed by the hybrid packet repair scheme 20 in FIGS. 1 and 2. In order to repair the media stream, the repair point 16 needs to determine which packets to retransmit using unicast packets 32, which packets to retransmit using multicast packets 34, whether to switch to FEC-based repair 36 rather than retransmitting, or whether to give up when there is insufficient aggregate bandwidth to sufficiently repair the media stream 22 and satisfy the receivers 50.

In operation 82 the NACK packets 26 (FIG. 2) are monitored. The number and/or pattern of monitored NACKs in combination with limits on network bandwidth may indicate in operation 82 that no repair should be performed. Accordingly, the identified lost media packets 24 are not repaired in operation 84. Otherwise, operation 86 determines if error correction is available for repairing the lost packets. For example, when a limited number of different packets are indicated as lost, error correction packets 36 may be sent to the receivers 50. The receivers then locally recreate the data from the lost packets using the FEC packets 36.

In operation 88, the NACK pattern in table 62 (FIG. 2) may indicate that unicast repair is the most efficient scheme for repairing lost packets. Accordingly, the identified lost packets are sent using unicast retransmissions in operation 90 to the specific receivers identifying the lost packets.

In operation 92, the NACK pattern in table 62 may indicate that multicast retransmission is the most efficient scheme for repairing lost packets. Accordingly, multicast retransmissions of the identified lost packets are sent in operation 94 to all of the receivers in the multicast group. In operation 96, and as described above in FIG. 3, the NACK pattern in table 62 may indicate that both unicast retransmission and multicast retransmission should be used. Accordingly in operation 98 unicast retransmissions of certain lost packets are sent to specific receivers 50 and multicast retransmissions of other lost packets are sent to all of the receivers 50 in the multicast group. In operation 99, forward error correction may be used whenever applicable to improve repair efficiency.

### Network Timing Considerations

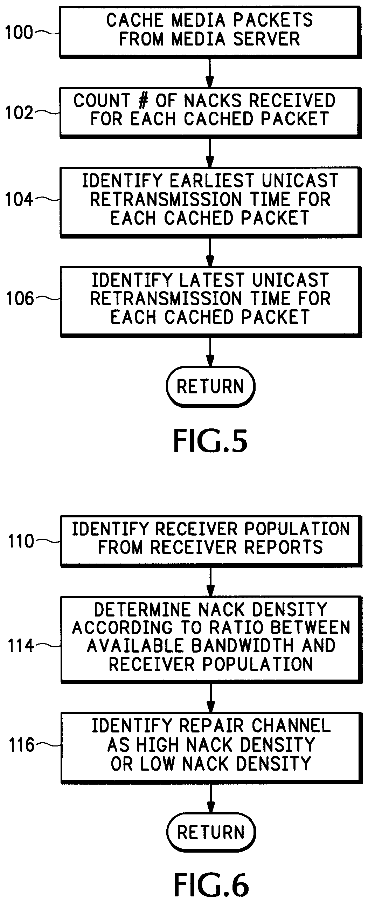

Referring to FIGS. 2 and 5, the repair point 16 in operation 100 caches the media packets 24A received from the media server 14. For each cached packet 24A that might be used to construct a unicast retransmission 32 or multicast retransmission 34, the repair point 16 in operation 102 counts the number of NACKs 26 received for the cached packet 24A.

The NACK count 66 is initialized to zero when the packet 24A is initially cached. When a NACK 26 is received, the cached packets 24A being NACKed are ascertained from a sequence number and bit map in the NACK 26. Accordingly, the NACK count 66 for an associated lost packet 64 is incremented by one for each received NACK .

In operation 104, an earliest unicast retransmission time is identified for each cached packet 24A based on a cache delay and a configured estimate of the playout point the receivers 50 use for the media channel 22. There may be some time period between when a receiver 50 identifies a lost media packet 24 and when that lost media packet needs to be played out by the receiver 50. For instance, a jitter buffer in the receiver 50 may provide a predetermined delay period from when a packet 24 is received to when the packet is played out. The repair point 16 may use some of this delay period to further analyze the NACK patterns in table 62 prior retransmitting a lost packet.

The idea is to avoid unicast retransmissions 32 when multicast retransmissions 34 or FEC 36 would be more effective. Accordingly, the repair point 16 monitors the NACKs 26 for some time window to provide an opportunity for multiple NACKs 26 to arrive. The time period in operation 104 is selected to be short enough so that retransmission repair completes before the NACKing receiver 50 needs to playout the repair packet. This time period also accounts for network transmission delay and any delay in receiving the packet in retransmission cache 60.

Similarly, a latest unicast retransmission time for the lost packet is identified in operation 106 based on the same network parameters mentioned. The latest retransmission time indicates whether the deadline has passed for usefully repairing a media stream with the cached packet 24A. In other words, if the repair point 16 cannot send the cached packet 24A to the receiver 50 in time to be played out at the proper moment, then there is no utility in sending the retransmission packet. Accordingly, the hybrid packet repair scheme 20 may make repair decisions prior to expiration of the time period in operation 106.

### Receiver Density

Referring to FIGS. 2 and 6, the repair point 16 may need to know the upper bound for NACKs 26 received on channel 28. The repair point 16 is configured with information for the feedback control channel 28 such as the available IP bandwidth inbound from the receivers 50.

The repair point in operation 110 also identifies the number of receivers 50 actively receiving the media packets 22 (receiver population) through the RTCP receiver reports 58. The repair point can thereby ascertain if the bandwidth of feedback channel 28 could be exceeded if a large fraction of the receivers 50 sent NACKs 26 at the same time.

The repair point 16 in operation 114 computes a NACK density which may be the ratio of the available bandwidth of feedback channel 28 to the identified receiver population. There may be a lower bound of 1 to cover the case when more than enough bandwidth is available to handle all the receivers 50. The NACK density computed in operation 114 is used to scale the impact of the NACKs 26 that are successfully received and processed by the repair point 16. The NACK density is periodically recomputed in operation 114 using the current receiver population estimate in operation 110.

In one embodiment, the NACK density is classified as either high density or low density in operation 116. For example, a high NACK density is selected when the NACK density is above the range 1-1.5 and the low NACK density is selected when the NACK density is below this range. This high or low classification is used in one embodiment described below when determining which scheme to use for repairing the lost media packets.

### NACK Density Based Repair Schemes

The hybrid packet repair scheme 20 may maintain, on a per channel basis, a retransmission bandwidth budget, represented as a fraction of the original stream bandwidth. For example, the repair scheme 20 might be configured to allow each media stream 22 (FIG. 2) to use an additional 20% over its native bandwidth for unicast or multicast retransmissions 32, 34, and/or for FEC 36. By knowing the bandwidth of native media stream 22, the repair point 16 can then ascertain an upper bound on the amount of available repair bandwidth.

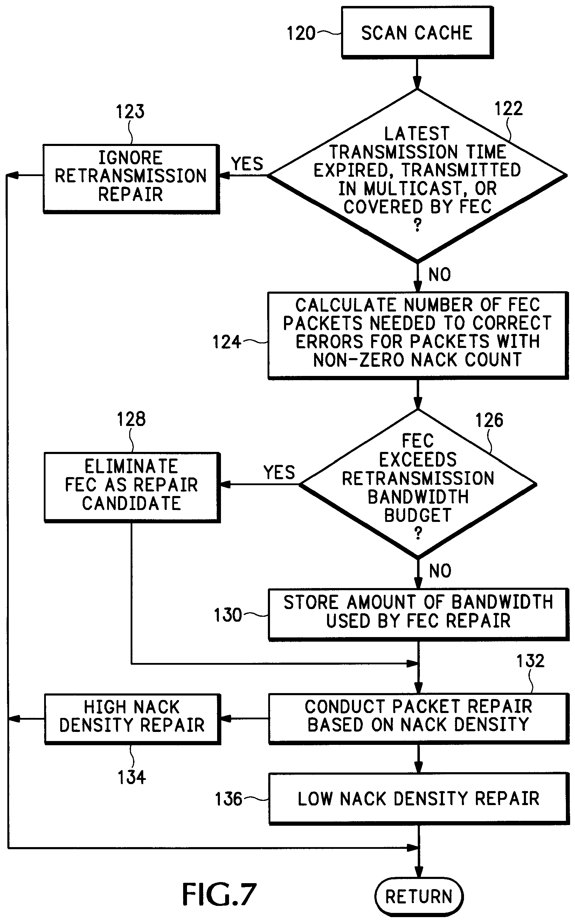

Referring to FIGS. 2 and 7, the retransmission cache 60 may be scanned every few milliseconds in operation 120. Packets whose latest retransmission time has expired, which have already been transmitted by multicast, or have been covered by an FEC operation are identified in operation 122 and ignored in operation 123.

The hybrid repair scheme in operation 124 determines if FEC would be the most effective technique for repairing the current set of errors. First the number of FEC packets are counted that would be needed to correct all lost packets with a non-zero NACK count. If the total bandwidth for the calculated number of FEC packets exceeds the retransmission bandwidth budget in operation 126, FEC is eliminated as a current repair mechanism candidate in operation 128. If FEC does fit within the bandwidth budget, the amount of bandwidth used for FEC is stored in operation 130 and considered later in repair operation 132. A high NACK density repair scheme is used in operation 134 when a high NACK density was identified in operation 116 of FIG. 6 and a low NACK density repair scheme is used in operation 136 when a low NACK density was identified in operation 116.

### Low NACK Density

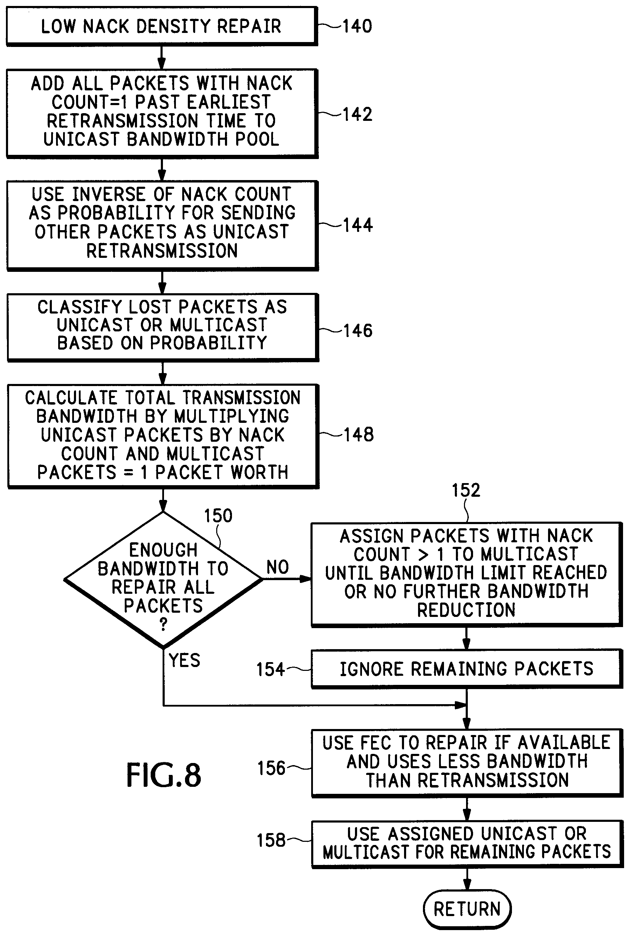

Referring to FIG. 8, a low NACK density is identified in operation 140 (see FIG. 6). After the earliest retransmission time has passed (see operation 104 in FIG. 5), all packets identified in NACK table 62 with a NACK count of 1 are added to a unicast bandwidth pool in operation 142. These packets are added to the unicast pool because it is highly likely based on the low NACK density that only one receiver would be interested in this packet.

The inverse of the NACK count is used in operation 144 as a probability for using unicast retransmission to repair other lost packets. In other words, as the NACK count increases, there is a lower probably of using unicast retransmission to repair the lost packet. Based on the calculated probabilities, the lost packets are identified as either candidates for unicast or multicast retransmission in operation 146.

The total estimated required bandwidth is then calculated in operation 148. If a packet is selected for unicast retransmission, the estimated transmission bandwidth used is multiplied by the associated NACK count 66. Otherwise, the packet is selected for multicast retransmission and the transmission bandwidth is estimated at 1 packet.

If there is insufficient bandwidth to accommodate retransmitting all the lost packets in operation 150, a fall back scheme assigns all packets with a NACK count > 1 to multicast retransmission in operation 152. The reassigned packets are each counted as using a single packet's worth of bandwidth. Unicast candidate packets are reassigned as multicast retransmissions in operation 152 until the bandwidth limit is reached. Remaining packets that still do not fit in the budget are considered un-repairable and ignored in operation 154.

When sufficient bandwidth exists in operation 150, or after completing operation 154, FEC may be applied in operation 156. If FEC is available and uses less bandwidth than the selected retransmission scheme, then FEC packets 36 may be sent instead of retransmitting packets. Otherwise, the assigned unicast or multicast retransmission scheme is used to send the lost packets to the receives in operation 158.

### High NACK Density

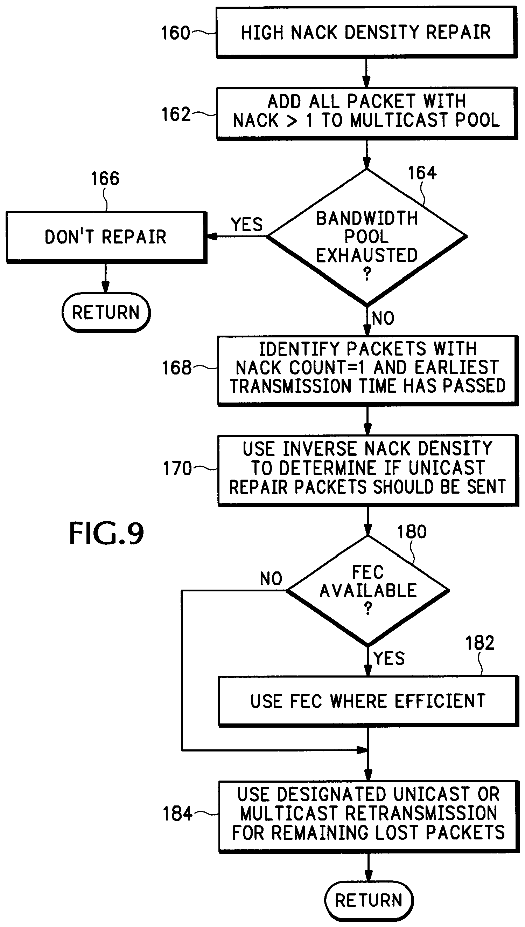

Referring to FIGS. 2 and 9, the high density algorithm may have less NACK information to work with and therefore is conservative about using unicast since correlated errors may tend to cause NACK implosions. The high NACK density repair scheme is identified in operation 160 pursuant to the analysis in FIGS. 5, 6, and 7. All packets with a NACK count in table 62 greater than one are added to the multicast bandwidth pool in operation 162. If the bandwidth pool is exhausted before all the identified lost packets are added to the bandwidth pool in operation 164, then the packet repair is aborted in operation 166. In this case it is unlikely the repair operations will improve the media stream. For example, so many packets may have been lost by so many receivers that given the limits on repair bandwidth attempting repair probably would not substantially correct the media stream and possibly could cause additional packet loss in the native media stream 22.

If the repair bandwidth pool is not exhausted in operation 164, then packets with a NACK count of one whose earliest retransmission time has passed are then considered for unicast retransmission in operation 168. The inverse of the NACK density calculated in FIG. 6 is used in operation 170 as the probability value to determine whether to schedule the single NACK count packets for unicast retransmission. In other words, the higher the NACK density, the less likely that any unicast retransmissions will be used.

Once the packets are classified, if FEC is an option in operation 180 and uses less bandwidth than multicast retransmission, the error is repaired with FEC in operation 182. Otherwise the packets are repaired using the designated multicast or unicast repair in operation 184.

### Receiver Repair Considerations

The receivers 50 (FIG. 2) may indicate in the NACKs 26 whether or not they have local FEC repair capability. For example, particular receivers 50 may not have the processing capacity to effectively correct packets using FEC. These receivers 50 would then provide an identifier 27 in any sent NACKs 26A that indicates lack of FEC capability. The hybrid packet repair scheme 20 described above would then adjust the selected repair scheme according to the FEC indications 27 so that no FEC packets 36 are sent to receivers 50 with no FEC correction capability. For example, in the schemes described above, the FEC option would not be considered for any receivers 50 sending NACKs 27A and only unicast retransmission 32 or multicast retransmission 34 would be used for associated packet loss correction.

A popularity (or priority) metric could also be associated with individual multicast streams 22, and repair precedence could be given to the higher popularity streams. Repair preference would then be based on the order of decreasing priority. Alternatively, a "RED" scheme could skip a few streams randomly. The scheme could be used for any multimedia multicast service including any video or audio information.

Thus, the hybrid adaptive repair scheme uses unicast retransmission, multicast retransmission, and FEC to repair RTP multicast sessions. The scheme is highly robust; saves bandwidth; is highly adaptable to various access network configurations, receiver densities, and available bandwidth; and deals with upstream losses in a way that avoids control channel overhead or constant downstream bandwidth usage as would be required by a pure FEC solution.

Several preferred examples of the present application have been described with reference to the accompanying drawings. Various other examples of the invention are also possible and practical. This application may be exemplified in many different forms and should not be construed as being limited to the examples set forth herein.

The figures listed above illustrate preferred examples of the application and the operation of such examples. In the figures, the size of the boxes is not intended to represent the size of the various physical components. Where the same element appears in multiple figures, the same reference numeral is used to denote the element in all of the figures where it appears. When two elements operate differently, different reference numerals are used regardless of whether the two elements are the same class of network device.

Only those parts of the various units are shown and described which are necessary to convey an understanding of the examples to those skilled in the art. Those parts and elements not shown are conventional and known in the art.

The system described above can use dedicated processor systems, micro controllers, programmable logic devices, or microprocessors that perform some or all of the operations.

Some of the operations described above may be implemented in software and other operations may be implemented in hardware.

For the sake of convenience, the operations are described as various interconnected functional blocks or distinct software modules. This is not necessary, however, and there may be cases where these functional blocks or modules are equivalently aggregated into a single logic device, program or operation with unclear boundaries. In any event, the functional blocks and software modules or features of the flexible interface can be implemented by themselves, or in combination with other operations in either hardware or software.

Having described and illustrated the principles of the invention in a preferred embodiment thereof, it should be apparent that the invention may be modified in arrangement and detail without departing from such principles. We claim all modifications and variation coming within the scope of the following claims.

## Claims

1. An apparatus (16), comprising:
one or more processors (18, 20); and
a memory coupled to the one or more processors comprising instructions executable by the processors, at least one (20) of the processors operable when executing the instructions to:
store packets (24) from a media stream (22);
monitor lost packet notices (26) identifying packets (24) lost from the media stream (22);
increment (102), in a table (62) that identifies (64) the lost packets, a count of a number of receivers (50) that have lost the packets (24);
analyse a pattern of the lost packet notices (26) based on entries in the table (62);
select one or more repair schemes based on the analysed pattern of the identified lost packet notices (26), wherein the repair schemes include:
unicast (32) retransmission of the identified lost packets,
multicast (34) retransmission of the identified lost packets,
sending one or more error correction packets, and
a combination thereof, for repairing or retransmitting the identified lost packets to one or more receivers (50) in a network; and
retransmit one or more of the identified lost packets (60) and/or send the one or more error correction packets for repairing the identified lost packets to one or more receivers (50) according to the selected one or more repair schemes.

2. The apparatus according to claim 1 wherein at least one of the processors uses the multicast retransmissions for repairing certain correlated lost packets and uses the unicast retransmissions for repairing certain uncorrelated lost packets.

3. The apparatus according to claim 1 wherein at least one of the processors uses the unicast retransmissions for packets lost by a relatively small number of receivers and uses the multicast retransmissions for packets lost by a relatively large number of receivers.

4. The apparatus according to claim 1 wherein at least one of the processors sends the error correction packets when multiple different lost packets can be corrected with the same error correction packets and sending the error correction packets is more bandwidth efficient than retransmitting the identified lost packets.

5. The apparatus according to claim 1 including:
a retransmission cache for storing the packets from the media stream;
wherein at least one of the processors then retransmits the packets in the retransmission cache corresponding to the identified lost packets when the repair scheme has been selected.

6. The apparatus according to claim 1 wherein at least one of the processors periodically identifies a number of receivers that are actively receiving the media stream and selects between the different repair schemes according to the identified number of receivers.

7. The apparatus according to claim 6 wherein at least one of the processors applies a higher weight to multicasting packet retransmissions when there is a relatively high number of receivers actively receiving the media stream and more evenly weight unicasting and multicasting packet retransmissions when there is a relatively low number of receivers actively receiving the media stream.

8. The apparatus according to claim 1 wherein at least one of the processors identifies Forward Error Correction, FEC, indicators, in at least some of the monitored lost packet notices, that identify a capability of associated receivers for performing FEC, at least one of the processors then selecting whether or not to use the sending error correction packets as the repair scheme for repairing lost packets according to the FEC indicators in the associated lost packet notices.

9. A method, comprising:
storing packets from a media stream;
receiving (80) lost packet notices identifying packets lost from the media stream;
incrementing (100), in a table that identifies the lost packets, a count of a number of receivers that have lost the packets;
analysing a pattern of the lost packet notices based on entries in the table;
selecting (86, 88, 92, 96) one or more repair schemes based on the analysed pattern of the identified lost packet notices (26), wherein the repair schemes include:
unicast retransmissions of the identified lost packets,
multicast retransmission of the identified lost packets,
sending one or more error correction packets, and
a combination thereof, for repairing or retransmitting the identified lost packets to one or more receivers (50) in a network ; and
retransmitting one or more of the identified lost packets and/or sending the error correction packets for repairing the identified lost packets to one or more receivers according to the selected one or more repair schemes.

10. The method according to claim 9 including:
sending the error correction packets when at least some of the identified lost packets can be corrected using error correction; and
otherwise retransmitting the lost packets using the unicast retransmission, the multicast retransmission, or a combination thereof.

11. The method according to claim 10 including:
using the unicast retransmissions when a relatively small number of receivers lose a relatively small number of packets; and
using the multicast retransmissions when a relatively large number of receivers lose the same packets.

12. The method according to claim 9 including:
dynamically identifying a population of receivers actively receiving a media stream;
comparing the identified receiver population with an amount of network bandwidth available for packet repair and determining a probability that lost packet messages will be successfully received; and
selecting between the unicast retransmission and the multicast retransmission for repairing the identified lost packets according to the probability.

13. The method according to claim 9 including:
scanning a list identifying the lost packets;
forgoing retransmission repair for the identified lost packets that have expired latest transmission times, that have been previously retransmitted as multicast packets, or that can be repaired using forward error correction;
calculating a number of error correction packets needed to correct the identified lost packets;
eliminating the sending error correction packets when the calculated number of error correction packets exceeds a retransmission bandwidth budget; and
identifying an amount of bandwidth required for error correction and using the identified amount of bandwidth when selecting the repair schemes.

14. The method according to claim 9 wherein a packet repair scheme includes:
classifying the identified lost packets associated with a single lost packet notice as unicast retransmission candidates;
classifying the remaining identified lost packets as either unicast retransmission candidates or as multicast retransmission candidates according to the number of associated lost packet messages;
calculating the total bandwidth required to repair all of the identified lost packets according to their candidate classification; and
repeatedly reassigning at least some of the identified lost packets previously classified as unicast retransmission candidates as multicast retransmission candidates until the calculated bandwidth is below a predetermined threshold.

15. The method according to claim 9 wherein a packet repair scheme includes:
classifying the identified lost packets associated with more than one lost packet notice as multicast retransmission candidates; and
using a number of devices actively receiving an associated media stream and an amount of bandwidth available for repairing the identified lost packets when classifying the other identified lost packets with a single lost packet notice as unicast retransmission candidates or multicast retransmission candidates.

16. A system, comprising:
the apparatus (16) according to any one of claims 1 to 8; and
a receiver (50) comprising:
one or more processors configured to:
receive the media stream and send back Negative ACKnowledgments, NACKs, as the lost packet notices for any identified lost media packets from the media stream;
send periodic Real Time Control Protocol, RTCP, receiver reports to the apparatus; and
receive back the retransmitted one or more of the identified lost packets and/or error correction packets from the apparatus
wherein the one or more repair schemes are further selected according to a receiver population and a correlation status with other receivers losing media packets, the receiver population being indicated by the receiver reports and the correlation status indicates how different packet losses identified by a portion of the receiver population are related to each other.

17. The system according to claim 16 wherein the one or more processors of the receiver send a no-error correction message to the apparatus to prevent the error correction packets from being sent to repair the identified lost media packets.

18. The system according to claim 16 wherein:
the media stream has a primary Multicast Real Time Protocol, RTP, session along with a corresponding RTCP control channel and a unicast repair RTP/RTCP session;
the unicast repair RTP/RTCP session is used for sending unicast error correction packets when the unicast retransmission is selected for repairing the identified lost packets; and
a second SSM RTP/RTCP multicast session is used for sending multicast error correction packets when the multicast retransmission is selected for repairing the identified lost packets.

19. A computer readable medium including executable instructions which, when executed by one or more processors, cause the one or more processors to perform the method according to any one of claims 9 to 15.

## Patentansprüche

1. Vorrichtung (16), die Folgendes umfasst:
einen oder mehrere Prozessoren (18, 20); und
einen Speicher, der mit dem einen oder den mehreren Prozessoren gekoppelt ist und Befehle umfasst, die von den Prozessoren ausgeführt werden können, wobei mindestens einer (20) der Prozessoren Folgendes ausführen kann, wenn die Befehle ausgeführt werden:
Speichern von Paketen (24) aus einem Medienstrom (22);
Überwachen verlorener Paketbenachrichtigungen (26), die Pakete (24) identifizieren, die aus dem Medienstrom (22) verloren gegangen sind;
Inkrementieren (102) in einer Tabelle (62), die die verlorenen Pakete identifiziert (64), einer Zählung einer Anzahl von Empfängern (50), die die Pakete (24) verloren haben;
Analysieren eines Musters der Benachrichtigungen über verlorene Pakete (26) basierend auf Einträgen in der Tabelle (62);
Auswählen eines oder mehrerer Reparaturschemata basierend auf dem analysierten Muster der identifizierten Benachrichtigungen über verlorene Pakete (26), wobei die Reparaturschemata Folgendes umfassen:
eine Unicast- (32) Neuübertragung der identifizierten verlorenen Pakete,
eine Multicast- (34) Neuübertragung der identifizierten verlorenen Pakete,
Senden eines oder mehrerer Fehlerkorrekturpakete, und
einer Kombination davon zum Reparieren oder erneuten Senden der identifizierten verlorenen Pakete an einen oder mehrere Empfänger (50) in einem Netzwerk; und
erneutes Senden eines oder mehrerer der identifizierten verlorenen Pakete (60) und/oder Senden des einen oder der mehreren Fehlerkorrekturpakete zum Reparieren der identifizierten verlorenen Pakete an einen oder mehrere Empfänger (50) gemäß den ausgewählten einen oder mehreren Reparaturschemata.

2. Vorrichtung nach Anspruch 1, wobei mindestens einer der Prozessoren die Multicast-Neuübertragungen zum Reparieren bestimmter korrelierter verlorener Pakete verwendet und die Unicast-Neuübertragungen zum Reparieren bestimmter nicht korrelierter verlorener Pakete verwendet.

3. Vorrichtung nach Anspruch 1, wobei mindestens einer der Prozessoren die Unicast-Neuübertragungen für Pakete verwendet, die von einer relativ kleinen Anzahl von Empfängern verloren gegangen sind, und die Multicast-Neuübertragungen für Pakete verwendet, die von einer relativ großen Anzahl von Empfängern verloren gegangen sind.

4. Vorrichtung nach Anspruch 1, wobei mindestens einer der Prozessoren die Fehlerkorrekturpakete sendet, wenn mehrere verschiedene verlorene Pakete mit denselben Fehlerkorrekturpaketen korrigiert werden können, und das Senden der Fehlerkorrekturpakete bandbreiteneffizienter ist als das erneute Senden der identifizierten verlorenen Pakete.

5. Vorrichtung nach Anspruch 1, die Folgendes umfasst:
einen Neuübertragungscache zum Speichern der Pakete aus dem Medienstrom;
wobei mindestens einer der Prozessoren dann die Pakete in dem Neuübertragungscache erneut überträgt, die den identifizierten verlorenen Paketen entsprechen, wenn das Reparaturschema ausgewählt wurde.

6. Vorrichtung nach Anspruch 1, wobei mindestens einer der Prozessoren periodisch eine Anzahl von Empfängern identifiziert, die den Medienstrom aktiv empfangen, und zwischen den verschiedenen Reparaturschemata entsprechend der identifizierten Anzahl von Empfängern auswählt.

7. Vorrichtung nach Anspruch 6, wobei mindestens einer der Prozessoren ein höheres Gewicht auf Multicasting-Paket-Neuübertragungen anwendet, wenn eine relativ hohe Anzahl von Empfängern vorhanden ist, die den Medienstrom aktiv empfangen, und ein gleichmäßigeres Gewicht auf Unicasting- und Multicasting-Paket-Neuübertragungen anwendet, wenn eine relativ geringe Anzahl von Empfängern vorhanden ist, die den Medienstrom aktiv empfangen.

8. Vorrichtung nach Anspruch 1, wobei mindestens einer der Prozessoren in mindestens einigen der überwachten Verlustpaketbenachrichtigungen Vorwärtsfehlerkorrektur-(Forward Error Correction, FEC) Indikatoren identifiziert; die eine Fähigkeit der zugeordneten Empfänger zur Durchführung von FEC identifizieren, wobei mindestens einer der Prozessoren dann auswählt, ob die Sendefehlerkorrekturpakete als Reparaturschema für die Reparatur verlorener Pakete gemäß den FEC-Indikatoren in den zugehörigen Benachrichtigungen über verlorene Pakete verwendet werden sollen oder nicht.

9. Verfahren, das Folgendes umfasst:
Speichern von Paketen aus einem Medienstrom;
Empfangen (80) verlorener Paketbenachrichtigungen, die vom Medienstrom verlorene Pakete identifizieren;
Inkrementieren (100) in einer Tabelle, die die verlorenen Pakete identifiziert, einer Zählung einer Anzahl von Empfängern, die die Pakete verloren haben;
Analysieren eines Musters der Benachrichtigungen über verlorene Pakete basierend auf Einträgen in der Tabelle;
Auswählen (86, 88, 92, 96) eines oder mehrerer Reparaturschemata basierend auf dem analysierten Muster der identifizierten Benachrichtigungen über verlorene Pakete (26), wobei die Reparaturschemata Folgendes umfassen:
eine Unicast-Neuübertragung der identifizierten verlorenen Pakete,
eine Multicast-Neuübertragung der identifizierten verlorenen Pakete,
Senden eines oder mehrerer Fehlerkorrekturpakete, und
einer Kombination davon zum Reparieren oder erneuten Senden der identifizierten verlorenen Pakete an einen oder mehrere Empfänger (50) in einem Netzwerk; und
erneutes Senden eines oder mehrerer der identifizierten verlorenen Pakete und/oder Senden der Fehlerkorrekturpakete zum Reparieren der identifizierten verlorenen Pakete an einen oder mehrere Empfänger gemäß dem ausgewählten einen oder mehreren Reparaturschemata.

10. Verfahren nach Anspruch 9, das Folgendes umfasst:
Senden der Fehlerkorrekturpakete, wenn mindestens einige der identifizierten verlorenen Pakete unter Verwendung einer Fehlerkorrektur korrigiert werden können; und
andernfalls erneutes Übertragen der verlorenen Pakete unter Verwendung der Unicast-Neuübertragung, der Multicast-Neuübertragung oder einer Kombination davon.

11. Verfahren nach Anspruch 10, das Folgendes umfasst:
Verwenden der Unicast-Neuübertragungen, wenn eine relativ kleine Anzahl von Empfängern eine relativ kleine Anzahl von Paketen verliert; und
Verwenden der Multicast-Neuübertragungen, wenn eine relativ große Anzahl von Empfängern dieselben Pakete verliert.

12. Verfahren nach Anspruch 9, das Folgendes umfasst:
dynamisches Identifizieren einer Population von Empfängern, die aktiv einen Medienstrom empfangen;
Vergleichen der identifizierten Empfängerpopulation mit einer Menge an Netzwerkbandbreite, die für die Paketreparatur verfügbar ist, und Bestimmen einer Wahrscheinlichkeit, dass verlorene Paketnachrichten erfolgreich empfangen werden; und
Auswählen zwischen der Unicast-Neuübertragung und der Multicast-Neuübertragung zum Reparieren der identifizierten verlorenen Pakete gemäß der Wahrscheinlichkeit.

13. Verfahren nach Anspruch 9, das Folgendes umfasst:
Scannen einer Liste, die die verlorenen Pakete identifiziert;
Verzicht auf die Reparatur der erneuten Übertragung für die identifizierten verlorenen Pakete, deren letzte Übertragungszeiten abgelaufen sind und die zuvor als Multicast-Pakete erneut übertragen wurden oder die mithilfe der Vorwärtsfehlerkorrektur repariert werden können;
Berechnen einer Anzahl von Fehlerkorrekturpaketen, die erforderlich sind, um die identifizierten verlorenen Pakete zu korrigieren;
Eliminieren der Sendefehlerkorrekturpakete, wenn die berechnete Anzahl von Fehlerkorrekturpaketen ein Budget für die Neuübertragungsbandbreite überschreitet; und
Identifizieren einer für die Fehlerkorrektur erforderlichen Bandbreite und Verwenden der identifizierten Bandbreite bei der Auswahl der Reparaturschemata.

14. Verfahren nach Anspruch 9, wobei ein Paketreparaturschema Folgendes umfasst:
Klassifizieren der identifizierten verlorenen Pakete, die mit einer einzelnen Benachrichtigung über verlorene Pakete verbunden sind, als Unicast-Neuübertragungskandidaten;
Klassifizieren der verbleibenden identifizierten verlorenen Pakete als entweder Unicast-Neuübertragungskandidaten oder als Multicast-Neuübertragungskandidaten gemäß der Anzahl der zugeordneten verlorenen Paketnachrichten;
Berechnen der Gesamtbandbreite, die erforderlich ist, um alle identifizierten verlorenen Pakete gemäß ihrer Kandidatenklassifizierung zu reparieren; und
wiederholtes Neuzuweisen von mindestens einigen der identifizierten verlorenen Pakete, die zuvor als Unicast-Neuübertragungskandidaten klassifiziert wurden, als Multicast-Neuübertragungskandidaten, bis die berechnete Bandbreite unter einem vorbestimmten Schwellenwert liegt.

15. Verfahren nach Anspruch 9, wobei ein Paketreparaturschema Folgendes umfasst:
Klassifizieren der identifizierten verlorenen Pakete, die mit mehr als einer Benachrichtigung über verlorene Pakete verbunden sind, als Multicast-Neuübertragungskandidaten; und
Verwenden einer Anzahl von Vorrichtungen, die aktiv einen zugeordneten Medienstrom empfangen, und einer verfügbaren Bandbreite für die Reparatur der identifizierten verlorenen Pakete beim Klassifizieren der anderen identifizierten verlorenen Pakete mit einer einzelnen Benachrichtigung über verlorene Pakete als Unicast-Neuübertragungskandidaten oder Multicast-Neuübertragungskandidaten.

16. System, das Folgendes umfasst:
die Vorrichtung (16) nach einem der Ansprüche 1 bis 8; und
einen Empfänger (50), der Folgendes umfasst:
einen oder mehrere Prozessoren, die für Folgendes konfiguriert sind:
Empfangen des Medienstroms und Zurücksenden von negativen Bestätigungen (Negative ACKnowledgments, NACKs) als Benachrichtigungen über verlorene Pakete für identifizierte verlorene Medienpakete aus dem Medienstrom;
Senden von periodischen Echtzeitsteuerprotokoll-Empfängerberichten (Real Time Control Protocol, RTCP) an die Vorrichtung; und
Zurückerhalten der erneut übertragenen einen oder mehreren der identifizierten verlorenen Pakete und/oder Fehlerkorrekturpakete von der Vorrichtung, wobei das eine oder die mehreren Reparaturschemata ferner entsprechend einer Empfängerpopulation und einem Korrelationsstatus mit anderen Empfängern ausgewählt werden, die Medienpakete verlieren, wobei die Empfängerpopulation von den Empfängerberichten angezeigt wird, und der Korrelationsstatus anzeigt, wie unterschiedliche Paketverluste, die von einem Teil der Empfängerpopulation identifiziert wurden, miteinander in Beziehung stehen.

17. System nach Anspruch 16, wobei der eine oder die mehreren Prozessoren des Empfängers eine fehlerfreie Korrekturnachricht an die Vorrichtung senden, um zu verhindern, dass die Fehlerkorrekturpakete gesendet werden, um die identifizierten verlorenen Medienpakete zu reparieren.

18. System nach Anspruch 16, wobei:
der Medienstrom eine primäre Multicast-Echtzeitprotokoll- (Real Time Protocol, RTP) Sitzung sowie einen entsprechenden RTCP-Steuerkanal und eine Unicast-Reparatur-RTP/RTCP-Sitzung aufweist;
die Unicast-Reparatur-RTP/RTCP-Sitzung zum Senden von Unicast-Fehlerkorrekturpaketen verwendet wird, wenn die Unicast-Neuübertragung zum Reparieren der identifizierten verlorenen Pakete ausgewählt wird; und
eine zweite SSM-RTP/RTCP-Multicast-Sitzung zum Senden von Multicast-Fehlerkorrekturpaketen verwendet wird, wenn die Multicast-Neuübertragung zum Reparieren der identifizierten verlorenen Pakete ausgewählt wird.

19. Computerlesbares Medium mit ausführbaren Anweisungen, die, wenn sie von einem oder mehreren Prozessoren ausgeführt werden, den einen oder die mehreren Prozessoren veranlassen, das Verfahren gemäß einem der Ansprüche 9 bis 15 durchzuführen.

## Revendications

1. Appareil (16), comprenant :
un ou plusieurs processeurs (18, 20) ; et
une mémoire couplée auxdits un ou plusieurs processeurs comprenant des instructions exécutables par les processeurs, au moins un (20) des processeurs étant exploitable lors de l'exécution des instructions pour :
stocker des paquets (24) provenant d'un flux média (22) ;
surveiller des notifications de paquets perdus (26) qui identifient des paquets (24) perdus provenant du flux média (22) ;
incrémenter (102), dans une table (62) qui identifie (64) les paquets perdus, un comptage d'un nombre de récepteurs (50) qui ont perdu les paquets (24) ;
analyser un modèle des notifications de paquets perdus (26) sur la base d'entrées dans la table (62) ;
sélectionner un ou plusieurs schémas de réparation sur la base du modèle analysé des notifications de paquets perdus identifiés (26), les schémas de réparation incluant :
une retransmission en unidiffusion (32) des paquets perdus identifiés,
une retransmission en multidiffusion (34) des paquets perdus identifiés,
l'envoi d'un ou plusieurs paquets de correction d'erreur, et une combinaison de ceux-ci, pour
réparer ou retransmettre les paquets perdus identifiés à un ou plusieurs récepteurs (50) dans un réseau ; et
retransmettre un ou plusieurs des paquets perdus identifiés (60) et/ou envoyer lesdits un ou plusieurs paquets de correction d'erreur pour réparer les paquets perdus identifiés à un ou plusieurs récepteurs (50) en fonction desdits un ou plusieurs schémas de réparation sélectionnés.

2. Appareil selon la revendication 1 dans lequel au moins un des processeurs utilise les retransmissions en multidiffusion pour réparer certains paquets perdus corrélés et utilise les retransmissions en unidiffusion pour réparer certains paquets perdus non corrélés.

3. Appareil selon la revendication 1 dans lequel au moins un des processeurs utilise les retransmissions en unidiffusion pour des paquets perdus par un nombre relativement petit de récepteurs et utilise les retransmissions en multidiffusion pour des paquets perdus par un nombre relativement grand de récepteurs.

4. Appareil selon la revendication 1 dans lequel au moins un des processeurs envoie les paquets de correction d'erreur lorsque de multiples paquets perdus différents peuvent être corrigés avec les mêmes paquets de correction d'erreur et l'envoi des paquets de correction d'erreur est plus efficace en termes de bande passante que la retransmission des paquets perdus identifiés.

5. Appareil selon la revendication 1 incluant :
un cache de retransmission pour stocker les paquets provenant du flux média ;
dans lequel au moins un des processeurs retransmet ensuite les paquets dans le cache de retransmission correspondant aux paquets perdus identifiés lorsque le schéma de réparation a été sélectionné.

6. Appareil selon la revendication 1 dans lequel au moins un des processeurs identifie périodiquement un nombre de récepteurs qui sont en train de recevoir activement le flux média et effectue une sélection entre les différents schémas de réparation en fonction du nombre identifié de récepteurs.

7. Appareil selon la revendication 6 dans lequel au moins un des processeurs applique un poids plus élevé à des retransmissions de paquets en multidiffusion lorsqu'il existe un nombre relativement élevé de récepteurs qui reçoivent activement le flux média et des retransmissions de paquets en unidiffusion et en multidiffusion à poids plus uniforme lorsqu'il existe un nombre relativement faible de récepteurs qui reçoivent le flux média.

8. Appareil selon la revendication 1 dans lequel au moins un des processeurs identifie des indicateurs de correction aval des erreurs (« Forward Error Correction »), FEC, dans au moins quelques-unes des notifications surveillées de paquets perdus, qui identifient une capacité de récepteurs associés à réaliser une FEC, au moins un des processeurs sélectionnant ensuite s'il s'agit d'utiliser l'envoi de paquets de correction d'erreur en tant que schéma de réparation pour réparer des paquets perdus en fonction des indicateurs FEC dans les notifications de paquets perdus associées.

9. Procédé, comprenant :
le stockage de paquets provenant d'un flux média ;
la réception (80) de notifications de paquets perdus qui identifient des paquets perdus provenant du flux média ;
l'incrémentation (100), dans une table qui identifie les paquets perdus, d'un comptage d'un nombre de récepteurs qui ont perdu les paquets ;
l'analyse d'un modèle des notifications de paquets perdus sur la base d'entrées dans la table ;
la sélection (86, 88, 92, 96) d'un ou plusieurs schémas de réparation sur la base du modèle analysé des notifications de paquets perdus identifiés (26), les schémas de réparation incluant :
des retransmissions en unidiffusion des paquets perdus identifiés,
une retransmission en multidiffusion des paquets perdus identifiés,
l'envoi d'un ou plusieurs paquets de correction d'erreur, et une combinaison de ceux-ci, pour réparer ou retransmettre les paquets perdus identifiés à un ou plusieurs récepteurs (50) dans un réseau ; et
la retransmission d'un ou plusieurs des paquets perdus identifiés et/ou l'envoi des paquets de correction d'erreur pour réparer les paquets perdus identifiés à un ou plusieurs récepteurs en fonction desdits un ou plusieurs schémas de réparation sélectionnés.

10. Procédé selon la revendication 9 incluant :
l'envoi des paquets de correction d'erreur lorsqu'au moins quelques-uns des paquets perdus identifiés peuvent être corrigés grâce à l'utilisation de la correction d'erreur ; et
sinon la retransmission des paquets perdus grâce à l'utilisation de la retransmission en unidiffusion, la retransmission en multidiffusion, ou une combinaison de celles-ci.

11. Procédé selon la revendication 10 incluant :
l'utilisation des retransmissions en unidiffusion lorsqu'un nombre relativement petit de récepteurs perdent un nombre relativement petit de paquets ; et
l'utilisation des retransmissions en multidiffusion lorsqu'un nombre relativement grand de récepteurs perdent les mêmes paquets.

12. Procédé selon la revendication 9 incluant :
l'identification dynamique d'une population de récepteurs qui reçoivent activement un flux média ;
la comparaison de la population de récepteurs identifiés avec une quantité de bande passante de réseau qui est disponible pour une réparation de paquets et la détermination d'une probabilité suivant laquelle des messages de paquets perdus seront reçus avec succès ; et
la sélection entre la retransmission en unidiffusion et la retransmission en multidiffusion pour réparer les paquets perdus identifiés en fonction de la probabilité.

13. Procédé selon la revendication 9 incluant :
le balayage d'une liste identifiant les paquets perdus ;
le renoncement à une réparation de retransmission pour les paquets perdus identifiés qui ont des temps de transmission à expiration la plus récente, qui ont été retransmis antérieurement en tant que paquets en multidiffusion, ou qui peuvent être réparés grâce à la correction aval des erreurs ;
le calcul d'un nombre de paquets de correction d'erreur requis pour corriger les paquets perdus identifiés ;
l'élimination de l'envoi de paquets de correction d'erreur lorsque le nombre calculé de paquets de correction d'erreur dépasse un budget de bande passante de retransmission ; et
l'identification d'une quantité de bande passante requise pour la correction d'erreur et l'utilisation de la quantité identifiée de bande passante lors de la sélection des schémas de réparation.

14. Procédé selon la revendication 9 dans lequel un schéma de réparation de paquets inclut :
le classement des paquets perdus identifiés, associés à une seule notification de paquet perdu, en tant que candidats de retransmission en unidiffusion ;
le classement des paquets perdus identifiés restants soit en tant que candidats de retransmission en unidiffusion soit en tant que candidats de retransmission en multidiffusion en fonction du nombre de messages de paquets perdus associés ;
le calcul de la bande passante totale requise pour réparer tous les paquets perdus identifiés en fonction de leur classement de candidat ; et
la ré-attribution de manière répétée d'au moins quelques-uns des paquets perdus identifiés, classés antérieurement en tant que candidats de retransmission en unidiffusion, en tant que candidats de retransmission en multidiffusion jusqu'à ce que la bande passante calculée se trouve en dessous d'un seuil prédéterminé.

15. Procédé selon la revendication 9 dans lequel un schéma de réparation de paquets inclut :
le classement des paquets perdus identifiés associés à plus d'une notification de paquet perdu en tant que candidats de retransmission en multidiffusion ; et
l'utilisation d'un nombre de dispositifs qui reçoivent activement un flux média associé et d'une quantité de bande passante disponible pour réparer les paquets perdus identifiés lors du classement des autres paquets perdus identifiés avec une seule notification de paquet perdu en tant que candidats de retransmission en unidiffusion ou candidats de retransmission en multidiffusion.

16. Système, comprenant :
l'appareil (16) selon l'une quelconque des revendications 1 à 8 ; et
un récepteur (50) comprenant :
un ou plusieurs processeurs configurés pour :
recevoir le flux média et envoyer en retour des accusés de réception négatifs (« Negative ACKnowledgments »), NACK, en tant que notifications de paquets perdus pour n'importe quels paquets média perdus identifiés provenant du flux média ;
envoyer des rapports de récepteur périodiques à protocole de commande en temps réel (« Real Time Control Protocol »), RTCP, à l'appareil ; et
recevoir en retour lesdits un ou plusieurs paquets retransmis des paquets perdus identifiés et/ou paquets de correction d'erreur provenant de l'appareil,
dans lequel lesdits un ou plusieurs schémas de réparation sont sélectionnés en outre en fonction d'une population de récepteurs et d'un statut de corrélation avec d'autres récepteurs qui perdent des paquets média, la population de récepteurs étant indiquée par les rapports de récepteurs et le statut de corrélation indique la manière dont différentes pertes de paquets, identifiées par une partie de la population de récepteurs, sont liées les unes aux autres.

17. Système selon la revendication 16 dans lequel lesdits un ou plusieurs processeurs du récepteur envoient un message de correction d'aucune erreur à l'appareil pour éviter que les paquets de correction d'erreur ne soient envoyés pour réparer les paquets média perdus identifiés.

18. Système selon la revendication 16 dans lequel :
le flux média a une session primaire en multidiffusion à protocole en temps réel (« Real Time Protocol »), RTP, en conjonction avec un canal de commande RTCP correspondant et une session RTP/RTCP de réparation en unidiffusion ;
la session RTP/RTCP de réparation en unidiffusion étant utilisée pour envoyer des paquets de correction d'erreur en unidiffusion lorsque la retransmission en unidiffusion est sélectionnée pour réparer les paquets perdus identifiés ; et
une deuxième session SSM RTP/RTCP en multidiffusion est utilisée pour envoyer des paquets de correction d'erreur en multidiffusion lorsque la retransmission en multidiffusion est sélectionnée pour réparer les paquets perdus identifiés.

19. Support lisible par ordinateur incluant des instructions exécutables qui, lorsqu'elles sont exécutées par un ou plusieurs processeurs, amènent lesdits un ou plusieurs processeurs à réaliser le procédé selon l'une quelconque des revendications 9 à 15.
